# EUROPÄISCHE PATENTANMELDUNG

(11) **EP 2 018 927 A1**
(43) Veröffentlichungstag der Anmeldung: **28.01.2009**
(21) Anmeldenummer: 07019760.3
(22) Anmeldetag: 09.10.2007
(51) Int. Cl.: B23K 7/00, B23K 10/00, B23K 26/14, B23K 26/38

(54) **Verfahren zum thermischen Trennen**

(30) Priorität: 26.07.2007 DE 102007035403
(71) Anmelder: Linde Aktiengesellschaft, 80807 München (DE)
(72) Erfinder: Danzer, Wolfgang, Dr., 84405 Dorfen (DE)

(57) **Zusammenfassung**

Die Erfindung betrifft ein Verfahren zum thermischen Trennen, wobei ein Schneidgas in eine Schneiddüse geleitet und mittels der Schneiddüse auf ein zu bearbeitendes Werkstück geführt wird, wobei der Volumenstrom des Schneidgases periodisch wiederholt zumindest vermindert wird, dadurch gekennzeichnet, dass das Verfahren mit einer Periodizität durchgeführt wird, die eine Frequenz aus dem Bereich von 700 Hz bis 8000 Hz aufweist.

## Beschreibung

Die vorliegende Erfindung betrifft ein Verfahren zum thermischen Trennen, wobei ein Schneidgas in eine Schneiddüse geleitet und mittels der Schneiddüse auf ein zu bearbeitendes Werkstück geführt wird, wobei der Volumenstrom des Schneidgases periodisch wiederholt zumindest vermindert wird.

Es sind eine Reihe von Verfahren zum thermischen Trennen bekannt. Beim thermischen Trennen werden Werkstücke geschnitten, indem an die zu schneidende Stelle des Werkstücks Energie zugeführt wird, wodurch vom Werkstück an der zu bearbeitenden Stelle Material entfernt wird. Das zu entfernende Material wird mit Hilfe des Schneidgasstrahls ausgetrieben.

Die thermischen Trennverfahren haben den Vorteil auf, dass sie als berührungslose Materialbearbeitungsverfahren keine Abnutzung des Schneidwerkzeugs aufweisen.

Die thermischen Trennverfahren werden nach der Art ihrer Energiezufuhr klassifiziert:
Beim autogenen Brennschneiden wird der Werkstoff mit einer Brenngas-Sauerstoff- oder einer Brenngas-Luft-Flamme auf Zündtemperatur erhitzt und im Schneidsauerstoffstrom oder in einem sauerstoffhaltigen Schneidgasstrom verbrannt. Durch die Verbrennung des Werkstoffs im Schneidsauerstoff wird dem Schneidprozess zusätzlich zur Flamme Energie zugeführt. Mit der kinetischen Energie des Sauerstoffstrahls werden die durch die Verbrennung entstehende Schlacke und der geschmolzene Werkstoff ausgetrieben.

Das Plasmaschneiden in erster Linie ein Schmelzprozess, bei welchem der Grundwerkstoff durch den Plasmalichtbogen geschmolzen und auch verdampft wird. Als Plasmalichtbogen bezeichnet man einen durch eine gekühlte Düse eingeschnürten ionisierten und dissoziierten Gasstrahl. Durch die Einschnürung erhält man einen Plasmastrahl mit hoher Energiedichte. Das Grundmaterial wird in der Schnittfuge durch den Plasmastrahl augenblicklich aufgeschmolzen und durch das Plasmagas aus der entstehenden Fuge geschleudert. Die zur Einschnürung notwendige Kühlung der Düse erfolgt üblicherweise entweder mittels Wasser und/oder mittels eines Sekundärgases, welches den Plasmastrahl umhüllt. Das Sekundärgas strömt also als Gasmantel um den Plasmalichtbogen, schnürt ihn weiter ein und verbessert die Schnittgüte und Schneidgeschwindigkeit. Die Anlagen, welche zusätzlich mit Sekundärgas als Kühlgas arbeiten, erzielen gute Schneidleistungen. Eine Variante des Plasmaschneidens mit Sekundärgas ist das Feinstrahl-Plasmaschneiden, bei welchem der Plasmastrahl sehr stark eingeschnürt wird. Ferner gibt es auch die Möglichkeit durch zusätzliche Wasserinjektion den Plasmastrahl weiter einzuschnüren. Das schmelzflüssige Material wird durch die hohe kinetische Energie des Plasmagases ausgetrieben. Bei Verwendung eines Sekundärgases bläst auch dieses das flüssige Material aus. Als Plasmagas werden meist Argon, Stickstoff und Wasserstoff und Mischungen daraus eingesetzt. Dem Plasmagas wird in manchen Fällen auch Sauerstoff zugegeben, wobei der Sauerstoff zu einer Oxidation mit dem Werkstoff führen kann und dadurch zusätzliche Energie einbringt. Auch mit Druckluft als Gas wird gearbeitet. Bisweilen wird auch Kohlendioxid zugegeben. Wird ein Sekundärgas verwendet, wird auch für dieses eine Gas oder eine Gasmischung aus den eben genannten Gasen eingesetzt. Die Wahl des Gases beziehungsweise der Gaszusammensetzung wird durch die Verfahrenvariante und vor allem durch Dicke und Art des zu schneidenden Werkstoffes bestimmt.

Beim Laserstrahlschneiden wird ein Laserstrahl als Schneidwerkszeug benutzt. Dazu wird der Laserstrahl auf die gewünschte Stelle gelenkt, wofür in der Regel mit einer Linse im Schneidkopf der Laserstrahl auf die Oberfläche des zu schneidenden Werkstücks oder in das Innere des Werkstücks fokussiert wird, wobei die hohe Energiedichte den zu schneidenden Werkstoff schnell erwärmt. Beim Laserstrahlschmelzschneiden wird das Material auf Schmelztemperatur erwärmt und beim Lasersublimierschneiden auf Verdampfungstemperatur. Beim Laserstrahlbrennschneiden wird an die zu schneidende Stelle Sauerstoff geleitet, damit, wie zum Brennschneiden notwendig, durch die Verbrennung des Sauerstoffs mit dem Werkstoff zusätzliche Energie eingebracht wird. Der Laserstrahl erwärmt dazu das Werkstück an der Bearbeitungsstelle fortwährend auf die Entzündungstemperatur, so dass die Verbrennung des Werkstoffmaterials mit dem Schneidsauerstoff stattfinden kann. Das geschmolzene Material wird beim Laserstrahlschneiden mit dem Schneidgas aus der Schnittfuge ausgetrieben, wobei beim Laserstrahlbrennschneiden der Schneidsauerstoffstrahl neben dem geschmolzenen Material auch die entstehende Schlacke austreibt. Als Schneidgas wird beim Laserstrahlbrennschneiden Sauerstoff, ansonsten wird als Schneidgas meist Stickstoff, Argon und/oder Helium verwendet. Auch Druckluft wird eingesetzt. Der Laserstrahl ist ein ideales Werkzeug, um metallische und nichtmetallische Werkstoffe geringer Dicken zu schneiden. Mit zunehmender Werkstoffdicke nimmt die Schneidgeschwindigkeit des Laserstrahls jedoch stark ab. So können beispielsweise beim Laserstrahlbrennschneiden Bleche mit einer Dicke von etwa zwei Millimetern sechsmal schneller als Bleche mit einer Dicke von etwa fünfzehn Millimetern geschnitten werden.

Beim Laserstrahlschneiden kann die Schneidgeschwindigkeit erhöht werden, indem das Schneidgas in einem turbulenten Strom zugeführt wird. So ist beispielsweise aus der Druckschrift DE 43 36 010 A1 eine Laserschneidvorrichtung bekannt, bei der mittels eines Bearbeitungskopfes ein Haupthilfsgas und ein Nebenhilfsgas derart zugeführt werden, so dass sich der Gasstrom insgesamt in einem turbulenten Strömungszustand befindet. Ferner ist aus der DE 10 2004 052 323 A1 bekannt, dass durch eine modulierte Bewegung des Schneidkopfs die Scheidgeschwindigkeit beziehungsweise die zu schneidende Blechdicke erhöht werden kann. Auch durch eine nicht näher ausgeführte Modulierung von Laserleistung und Gasdruck kann dies erreicht werden. Die Druckschrift DE 10 2005 049 010 A1 offenbart ein Verfahren zum Laserstrahlschneiden, bei dem eine Druckmodulation des Schneidgasstroms durch den Einsatz von Schallwellen oder einer elektrischen Gasentladung eingesetzt wird.

Für das Plasmaschneiden ist es bekannt aus der SU 1683927 den Plasmastrahl durch Änderungen des dem Plasmalichtbogen zugrunde liegenden elektrischen Stroms zu pulsieren. Aus der GB 2194190 ist es bekannt einen Überschall-Plasmastrahl derartig zu modulieren, dass eine Perforierung geschnitten oder geschweißt werden kann. Dazu ist die Leistungsdichte abwechselnd über unter der Schwelle zum Schneiden beziehungsweise Schweißen. Erreicht wird dies durch Modulation des Gasflusses oder Modulation der elektrischen Leistung, mit welcher der Plasmalichtbogen betrieben wird.

Für das autogene Brennschneiden ist aus der Druckschrift DE 101 48 168 A1 ein Verfahren bekannt, bei dem das Schneidgas in der Schnittfuge turbulent strömt. Hierbei wird die Turbulenz des Gasstroms durch Pulsen mit einem Ventil oder durch einen weiteren diskontinuierlichen Gasstrom erzeugt. Das Dokument SU 812461 offenbart gepulste, zusätzliche Sauerstoffströme, die einem Hauptsauerstoffstrom in einem autogenen Brennschneidverfahren unter einem bestimmten Winkel zugeführt werden. In dem Dokument EP 533 387 A2 ist eine Vorrichtung und ein Verfahren zum Brennschneiden, insbesondere zum Laser-Brennschneiden, beschrieben, bei dem ein Hilfsgas in Form von Gaspulsen der Schneidvorrichtung zugeführt wird.

Aufgabe der vorliegenden Erfindung ist es ein thermisches Trennverfahren zur Verfügung zu stellen, das hinsichtlich der Schnittqualität und Stabilität des Schneidvorgangs verbessert ist, insbesondere auch bei hohen Schneidgeschwindigkeiten und bei dicken Blechen.

Die gestellte Aufgabe wird dadurch gelöst, dass das Verfahren mit einer Periodizität durchgeführt wird, die eine Frequenz aus dem Bereich von 800 Hz bis 8000 Hz aufweist. Die hohe Frequenz für die periodische Wiederholung ist besonders vorteilhaft. Es wurde gefunden, dass mit der vorliegenden Erfindung die Qualität der Schnitte und Schnittkanten gegenüber dem Stand der Technik deutlich verbessert werden konnte. Die Prozessstabilität und Reproduzierbarkeit des Verfahrens sind weiter erhöht. Das Austreiben des flüssigen Materials aus der Schnittfuge erfolgt zügiger, gleichmäßiger und vollständiger als bei den bekannten Verfahren. Diese Verbesserungen des Verfahrens erlauben eine weitere Erhöhung der Schneidgeschwindigkeit ohne Qualitätseinbußen beziehungsweise eine erhöhte Qualität bei unveränderter Schneidgeschwindigkeit.

Vorteilhafterweise wird die Änderung des Volumenstroms des Schneidgases so durchgeführt, dass eine stehende, schwingende Drucksäule ausgebildet wird. Die stehende, schwingende Drucksäule, die eine stehende Welle darstellt, wirkt sich besonders vorteilhaft auf den thermischen Trennprozess aus und ermöglicht eine optimale Druckverteilung und einen erhöhten Kraftübertrag auf das Werkstück. Die entstehende Drucksäule wird beim Schneiden durch die Schnittfuge durchgeschoben. Dies stellt eine deutliche Verbesserung gegenüber den bekannten Verfahren dar.

Gemäß einer bevorzugten Ausgestaltung der Erfindung wird das Schneidgas vor oder in der Schneiddüse periodisch wiederholt ausgeschalten.

Das periodische Aus- und Einschalten des Schneidgases stellt die bevorzugte Ausführungsform der Erfindung dar. Die Vorteile der Erfindung zeigen sich jedoch auch bereits deutlich, wenn das Schneidgas nicht ausgeschalten, sondern die Schneidgasmenge nur vermindert wird. Eine Verminderung der Schneidgasmenge um die Hälfte, oder auch nur um eine Drittel, ist dazu ausreichend. Als Folge des Abschaltens oder Verminderns des Schneidgases sinkt der Schneidgasdruck an der Bearbeitungsstelle. Besonders vorteilhaft sinkt der Schneidgasdruck im Rahmen der Erfindung auf Werte von etwa 10 bis 50% des Ausgangsschneidgasdrucks, der somit den Maximalwert darstellt.

Die periodische Wiederholung der Änderung des Volumenstroms des Schneidgases mit einer der Erfindung entsprechenden hohen Frequenz hat sich für alle thermischen Trennverfahren als vorteilhaft erwiesen. Die dadurch entstehende Taktung verbessert bei allen diesen Verfahren den Vorgang des Austreibens des flüssigen Materials. Bei den thermischen Trennverfahren, die eine Verbrennung von Werkstückmaterial im Schneidsauerstoff oder im sauerstoffhaltigen Schneidgas beinhalten, wird zusätzlich das Austreiben der sich bildenden Schlacke unterstützt.

Mit besonderem Vorteil wird also das thermische Trennen mittels der Methode des autogenen Brennschneidens und/oder des Laserschneidens, insbesondere des Laserbrennschneidens und des Laserschmelzschneidens, und/oder des Plasmaschneidens ausgeführt. Auch ein Lasersublemierschneiden ist möglich.

Gemäß einer besonders vorteilhaften Weiterbildung der Erfindung liegt die Frequenz für die periodische Wiederholung zwischen 1000 und 5000 Hz, bevorzugt zwischen 1200 und 3000 Hz, besonders bevorzugt zwischen 1500 und 2000 Hz. In diesen Bereichen wurden besonders gute Ergebnisse erzielt.

Zweckmäßigerweise wird das Schneidgas mechanisch, insbesondere mittels mindestens eines Ventils, besonders bevorzugt mittels eines magnetischen oder piezoelektrischen Ventils, vermindert oder ausgeschalten. Bevorzugt wird das Schneidgas mittels mindestens eines Ventils getaktet. Eine andere Möglichkeit stellt die Taktung durch einen weiteren Gasstrom dar, der dem Schneidgasstrom zeitweise zugeschaltet wird. Mit besonderem Vorteil wird ein stufenlos steuer- oder regelbares Ventil eingesetzt. Eine andere Möglichkeit ist es, dass mindestens ein weiterer Gasstrom entsprechend zugeschalten wird. Auch ein Bypass kann Anwendung finden. Gemäß einer vorteilhaften Weiterbildung der Erfindung wird zusätzlich die Zusammensetzung des Schneidgases periodisch wiederholt verändert.

Mit besonderem Vorteil wird die Änderung des Volumenstroms und gegebenenfalls auch der Zusammensetzung des Schneidgases mit einer konstanten Periode durchgeführt.

Mit besonderem Vorteil wird die Änderung des Volumenstroms des Schneidgases mit einer konstanten Amplitudenänderung durchgeführt.

Gemäß einer besonders vorteilhaften Ausgestaltung der Erfindung wird die Änderung des Volumenstroms und gegebenenfalls der Zusammensetzung des Schneidgases mit einem periodisch unverändert wiederkehrenden Verlauf durchgeführt. Die Änderung des Gasvolumenstroms über die Zeit kann z.B. zumindest zum Teil durch ein Rechteck-, Dreieck- oder Sinusprofil oder Kombinationen davon dargestellt werden. Die Änderung der Zusammensetzung z.B. eines zweikomponentigen Prozessgases kann beliebige Kurvenformen, besonders auch die oben genannten, annehmen. Dabei gilt es Darstellungen, bei denen auf der x- und y-Achse einer Darstellung jeweils eine Komponente des Prozessgases angetragen ist von Darstellungen, bei denen die Komponenten in y-Richtung und die Zeit in x-Richtung angetragen ist, zu unterscheiden.

Für bestimmte Anwendungen kann auch ein periodisch modifiziert wiederkehrender Verlauf besonders vorteilhaft sein.

Bevorzugt wird als Schneidgas Sauerstoff, Stickstoff, Argon, Wasserstoff oder ein Gemisch, das zumindest ein Gas aus dieser Gruppe enthält, eingesetzt. Auch Kohlendioxid wird verwendet.

Insbesondere bei einem Einsatz von Sauerstoff als Schneidgas beim Laserstrahlbrennschneiden zeigen sich die erfindungsgemäßen Vorteile, da durch die Änderung des Volumenstroms eine stehende Welle ausgebildet wird, welche beim Laserbrennschneiden insbesondere die Bildung der Oxidhaut in der Schnittfuge und die Schlackenbildung besonders vorteilhaft beeinflusst, da insbesondere beim Laserbrennschneiden die Ausbildung der Oxidhaut den Schneidvorgang behindert.

Beim Plasmaschneiden kann, sofern ein Plasmabrenner mit Plasmagas und Sekundärgas verwendet wird, sowohl das Plasmagas als auch das Sekundärgas als auch beide Gasströme gemäß der Erfindung moduliert werden. Besonders ausgeprägt zeigen sich die erfindungsgemäßen Vorteile jedoch, wenn nur das Sekundärgas gemäß der Erfindung moduliert wird und das Plasmagas während des Scheidvorgangs zeitlich unverändert gegen das Werkstück strömt. Wird ein Plasmabrenner ohne Sekundärgas verwendet, wird das Plasmagas gemäß der Erfindung variiert.

Beispielsweise kann somit bei einem Einsatz von Sauerstoff als Schneidgas der Schneidsauerstoff periodisch wiederholt aus- und wieder eingeschalten werden. Damit wird der Volumenstrom der Sauerstoffzufuhr variiert. Zum Aus- und Einschalten des Sauerstoffstroms wird z.B. besonders vorteilhaft ein piezoelektrisches Ventil eingesetzt, das für die bevorzugten Frequenzbereiche, die bereits genannt wurden, geeignet ausgelegt ist.

Wird gemäß einem weiteren Beispiel ein Gemisch aus Stickstoff und Sauerstoff als Schneidgas verwendet, kann beispielsweise der Schneidsauerstoff periodisch wiederholt ausgeschalten oder vermindert, also der Volumenstrom der Sauerstoffzufuhr variiert werden, womit der Anteil an Sauerstoff im Schneidgas und damit die Zusammensetzung des Schneidgases verändert wird. Durch zusätzliche Variation des Gesamtvolumenstroms des Schneidgases können diese Vorgänge weiter optimiert werden.

## Patentansprüche

1. Verfahren zum thermischen Trennen, wobei ein Schneidgas in eine Schneiddüse geleitet und mittels der Schneiddüse auf ein zu bearbeitendes Werkstück geführt wird, wobei der Volumenstrom des Schneidgases periodisch wiederholt zumindest vermindert wird, **dadurch gekennzeichnet, dass** das Verfahren mit einer Periodizität durchgeführt wird, die eine Frequenz aus dem Bereich von 700 Hz bis 8000 Hz aufweist.

2. Verfahren nach Anspruch 1, **dadurch gekennzeichnet, dass** eine stehende, schwingende Drucksäule ausgebildet wird.

3. Verfahren nach Anspruch 1 oder 2, **dadurch gekennzeichnet, dass** das Schneidgas vor oder in der Schneiddüse periodisch wiederholt ausgeschalten wird.

4. Verfahren nach einem der Ansprüche 1 bis 3, **dadurch gekennzeichnet, dass** das thermische Trennen mittels der Methode des autogenen Brennschneidens und/oder des Laser-Brennschneidens und/oder des Laser-Schmelzschneidens und/oder des Plasmaschneidens ausgeführt wird.

5. Verfahren nach einem der Ansprüche 1 bis 4, **dadurch gekennzeichnet, dass** die Frequenz für die periodische Wiederholung zwischen 1000 und 5000 Hz, bevorzugt zwischen 1200 und 3000 Hz, besonders bevorzugt zwischen 1500 und 2000 Hz liegt.

6. Verfahren nach einem der Ansprüche 1 bis 5, **dadurch gekennzeichnet, dass** das Schneidgas mechanisch, insbesondere mittels mindestens eines Ventils, besonders bevorzugt mittels eines magnetischen oder piezoelektrischen Ventils, vermindert oder ausgeschalten wird.

7. Verfahren nach einem der Ansprüche 1 bis 6, **dadurch gekennzeichnet, dass** die Zusammensetzung des Schneidgases periodisch wiederholt verändert wird.

8. Verfahren nach einem der Ansprüche 1 bis 7, **dadurch gekennzeichnet, dass** als Schneidgas Sauerstoff, Stickstoff, Argon, Wasserstoff oder ein Gemisch, das zumindest ein Gas aus dieser Gruppe enthält, eingesetzt wird.

9. Verfahren nach einem der Ansprüche 1 bis 8, **dadurch gekennzeichnet, dass** Sauerstoff als Schneidgas beim Laserstrahlbrennschneiden eingesetzt wird.

10. Verfahren nach einem der Ansprüche 1 bis8, **dadurch gekennzeichnet, dass** beim Plasmaschneiden mit einem Plasmabrenner mit Plasmagas und Sekundärgas ausschließlich das Sekundärgas periodisch wiederholt zumindest vermindert wird.
